# EUROPEAN PATENT APPLICATION

(11) **EP 4 654 660 A1**
(43) Date of publication of application: **26.11.2025**
(21) Application number: 23938724.4
(22) Date of filing: 26.05.2023
(51) Int. Cl.: H04W 28/14, H04L 67/63

(54) **MESSAGE FORWARDING METHOD AND APPARATUS, DEVICE, AND STORAGE MEDIUM**

(71) Applicant: New H3C Technologies Co., Ltd., Hangzhou, Zhejiang 310052 (CN)
(72) Inventor: ZHU, Shiyin, Beijing 100102 (CN)
(74) Representative: Zimmermann & Partner Patentanwälte mbB
(86) International application number: PCT/CN2023/096472
(87) International publication number: WO 2024/243724

(57) **Abstract**

Embodiments of the present application provide a message forwarding method and apparatus, a device, and a storage medium, which are applied to a network device. The method comprises: receiving, by means of a first ingress port, a first message of a deterministic flow: caching the first message to a first scheduling queue corresponding to the first ingress port; and when a scheduling period of the first scheduling queue is reached, forwarding the message in the first scheduling queue. In the technical solution provided by the embodiments of the present application, a network device, according to differences in ingress ports of received messages, caches the messages to different scheduling queues for forwarding, thus avoiding the problem of end-to-end jitter unpredictability caused by messages being received by different ingress ports and randomly queued in and forwarded from a same scheduling queue. Moreover, since only one message can be received through a same ingress port at a same moment, there will be no problem of conflict in said same scheduling queue, thereby achieving bounded jitter in deterministic networks.

## Description

### Technical field

The present disclosure relates to the technical field of network communication, and in particular to a method and apparatus for packet forwarding, a device and a storage medium.

### Background

In deterministic networks, there is a need to ensure the consistency in the delay and the jitter of a deterministic flow. However, in the case of a conflict between deterministic flows, the end-to-end jitter cannot be predicted, and a requirement of bounded jitter in the deterministic network cannot be met.

### Summary

The purpose of examples of the present disclosure is to provide a method and apparatus for packet forwarding, a device and a storage medium, to achieve the bounded jitter in the deterministic network.

In a first aspect, an example of the present disclosure provides a method for packet forwarding, which is applied to a network device, wherein the method includes:
receiving a first packet of a deterministic flow via a first incoming port;
caching the first packet to a first scheduling queue corresponding to the first incoming port; and
forwarding packets in the first scheduling queue in response to determining that a scheduling period of the first scheduling queue is reached.

In some examples, after receiving a first packet of a deterministic flow via a first incoming port, the method further including:
in response to determining that a correspondence between the deterministic flow and a second scheduling queue is stored, caching the first packet to the second scheduling queue; forwarding packets in the second scheduling queue in response to determining that a scheduling period of the second scheduling queue is reached; and
in response to determining that the correspondence between the deterministic flow and the second scheduling queue is not stored, performing an operation of caching the first packet to a first scheduling queue corresponding to the first incoming port.

In some examples, the caching the caching the first packet to a first scheduling queue corresponding to the first incoming port includes:
determining the first scheduling queue corresponding to the first incoming port based on pre-stored correspondences between incoming ports and scheduling queues;
caching the first packet to the first scheduling queue.

In some examples, the network device includes a plurality of incoming ports, wherein one incoming port corresponds to one scheduling queue.

In some examples, the caching the first packet to a first scheduling queue corresponding to the first incoming port includes:
determining a scheduling queue corresponding to the first incoming port and packet attributes of the first packet as the first scheduling queue, based on pre-stored correspondences between incoming ports, packet attributes and scheduling queues; and
caching the first packet to the first scheduling queue.

In some examples, the packet attributes include at least one of following information: a destination edge device, a destination terminal, a next hop node.

In a second aspect, an example of the present disclosure provides an apparatus for packet forwarding, which is applied to a network device, wherein the apparatus includes:
a receiving module, to receive a first packet of a deterministic flow via a first incoming port;
a first caching module, to cache the first packet to a first scheduling queue corresponding to the first incoming port; and
a first forwarding module, to forward packets in the first scheduling queue in response to determining that a scheduling period of the first scheduling queue is reached.

In some examples, the apparatus further includes a second caching module and a second forwarding module;
the second caching module is to, after receiving a first packet of a deterministic flow via a first incoming port, cache the first packet to a second scheduling queue in response to determining that a correspondence between the deterministic flow and the second scheduling queue is stored;
the second forwarding module is to forward packets in the second scheduling queue in response to determining that a scheduling period of the second scheduling queue is reached; and
the first caching module is specifically to cache the first packet to the first scheduling queue corresponding to the first incoming port in response to determining that the correspondence between the deterministic flow and the second scheduling queue is not stored.

In some examples, the first caching module includes:
a first determining sub-module, to determine the first scheduling queue corresponding to the first incoming port based on pre-stored correspondences between incoming ports and scheduling queues;
a first caching sub-module, to cache the first packet to the first scheduling queue.

In some examples, the network device includes a plurality of incoming ports, wherein one incoming port corresponds to one scheduling queue.

In some examples, the first caching module includes:
a second determining sub-module, to determine a scheduling queue corresponding to the first incoming port and packet attributes of the first packet as the first scheduling queue, based on pre-stored correspondences between incoming ports, packet attributes and scheduling queues;
a second caching sub-module, to cache the first packet to the first scheduling queue.

In some examples, the packet attributes include at least one of following information: a destination edge device, a destination terminal, a next hop node.

In a third aspect, an example of the present disclosure provides an electronic device including a processor, a communication interface, a memory and a communication bus, wherein the processor, the communication interface, and the memory communicate with each other via the communication bus;
the memory is to store computer programs;
the processor is to carry out any of the methods provided in the first aspect when executing the programs stored on the memory.

In a fourth aspect, an example of the present disclosure provides a computer readable storage medium having computer programs stored therein, the computer programs, when executed by a processor, carry out any of the methods provided in the first aspect.

In the technical solution provided by the examples of the present disclosure, the network device can cache packets received via the same incoming port to the same scheduling queue and cache packets received via different incoming ports to different scheduling queues, avoiding the conflict caused by caching the packets received via different incoming ports to the same scheduling queue, i.e. avoiding an unpredictable end-to-end jitter due to a random queuing of packets in the scheduling queue caused by the conflict between deterministic flows. In addition, there is only one packet of the deterministic flow passing through the same incoming port at the same time, and caching the packets received via the same incoming port to the same scheduling queue will not lead to the conflict between deterministic flows. Therefore, the bounded jitter in the deterministic network is achieved by using the technical solution provided by the example of the present disclosure for forwarding the packets of the deterministic flows.

### Brief Description of the Drawings

The accompanying drawings illustrated herein are used to provide a further understanding of the present disclosure and form a part of the present disclosure. The schematic examples of the present disclosure and their descriptions are used to explain the present disclosure and do not constitute an undue limitation of the present disclosure.
Fig. 1 shows a schematic diagram of a principle of queuing and forwarding of packets in the prior art;
Fig. 2 shows a schematic structure diagram of a first deterministic network architecture in the prior art;
Fig. 3 shows a schematic structure diagram of a second deterministic network architecture in the prior art;
Fig. 4 shows a first schematic flow diagram of a method for packet forwarding provided in an example of the present disclosure;
Fig. 5 shows a first schematic structure diagram of a deterministic network architecture provided by an example of the present disclosure;
Fig. 6 shows a second schematic flow diagram of a method for packet forwarding provided in an example of the present disclosure;
Fig. 7 shows a first schematic refined flow diagram of block S42 provided in an example of the present disclosure;
Fig. 8 shows a second schematic refined flow diagram of block S42 provided in an example of the present disclosure;
Fig. 9 shows a second schematic structure diagram of a deterministic network architecture provided in an example of the present disclosure;
Fig. 10 shows a schematic structure diagram of an apparatus for packet forwarding provided in an example of the present disclosure;
Fig. 11 shows a schematic structure diagram of an electronic device provided in an example of the present disclosure.

### Detailed Description

In order to make the objective, technical solutions and advantages of the disclosure clearer and more understandable, the disclosure will be described in more detail below with reference to the accompanying drawings and examples. Obviously, the described examples are only some, and not all, of the examples of the disclosure. All other examples obtained based on the examples of the disclosure by those skilled in the art without any creative efforts fall into the scope of protection of the disclosure.

The deterministic network is one of research hotspots in the technical field of communication, and the IETF (The Internet Engineering Task Force) has set up a special working group to focus on the research of related technique such as network reliability, delay and jitter. At present, related techniques such as CSQF (Cycle specified queuing and forwarding) and RCQF (Resilient Cycle Queuing and Forwarding) are used to guarantee the bounded jitter without the conflict between deterministic flows.

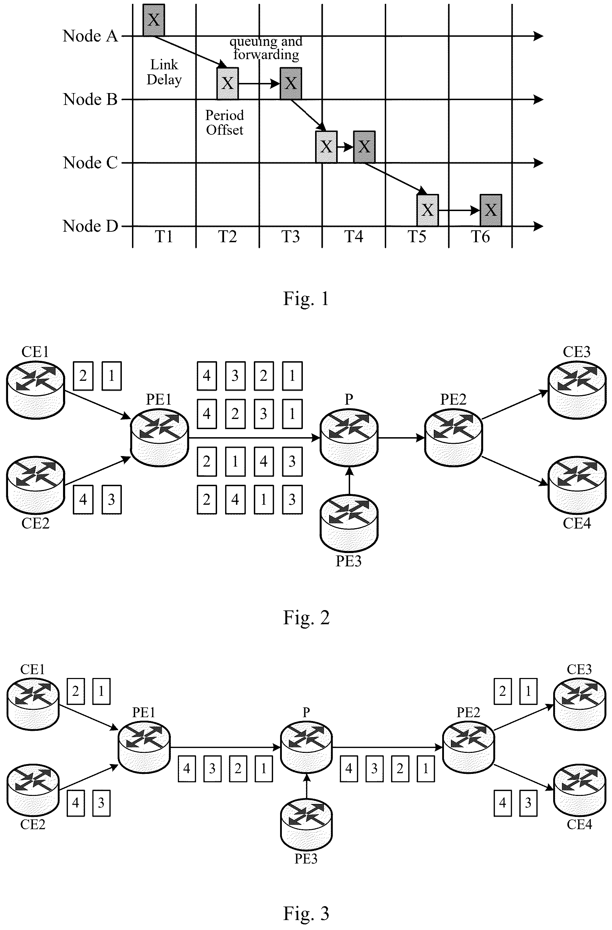

The basic idea of CSQF and RCQF is to divide multiple equal time slices with a scheduling period of T at each node, and to schedule deterministic flows with a uniform period so that they are forwarded within a determined time slice. It is assumed that each port of each node contains 16 scheduling periods, T1 to T16. The queuing and forwarding principle is shown in Fig. 1. A packet X is forwarded along a path of node A, node B, node C and node D. The packet arrives at the node A and is forwarded in a scheduling period T1. After prior measurement and planning, the packet can be forwarded by the node B in a scheduling period T3, be forwarded by the node C in a scheduling period T4 and be forwarded by the node D in a scheduling period T6. In this way, as long as the packet is received by the node A in the period T1, it will be forwarded according to this rule, thus guaranteeing stability of end-to-end delay.

These techniques can keep an end-to-end jitter within a certain range, such as 20 µs or 30 µs. However, the end-to-end jitter may still be un-predicable in the event of the conflict between deterministic flows.

In the deterministic network architecture shown in Fig. 2, CE (Customer Edge) devices include CE1, CE2, CE3 and CE4, PE (Provider Edge) devices include PE1, PE2, PE3, as well as P (Provider) device. CE1 sends a deterministic flow 1 to PE1, and the deterministic flow 1 is forwarded to CE3 via P and PE2. CE2 sends a deterministic flow 2 to PE1, and the deterministic flow 2 is forwarded to CE4 via P and PE2. The deterministic flow 1 and the deterministic flow 2 correspond to a same scheduling queue on a same exit of PE1. Assuming that port rates from CE1 and CE2 to are both 10G and that a port rate from PE1 to node P is also 10G, a 2-to-1 situation will occur instantly in the exit direction of PE1, that is, a situation where packets from multiple incoming ports compete to be sent from the same outgoing port will occur instantly. This requires queuing and forwarding of packets of the deterministic flows from CE1 and CE2 in a scheduling queue at the exit of PE1. However, the queuing is random, resulting in four situations shown in Fig. 2, represented as 1234, 1324, 3412, 3142 respectively. In Fig. 2, each rectangular box represents one packet of a deterministic flow and the number in the rectangular box represents the packet number. Passage 1 and passage 2 are from the deterministic flow 1, and passage 3 and passage 4 are from the deterministic flow 2.

Thus, no matter for deterministic flow 1 or deterministic flow 2, there is a jitter in queuing time of both packets. Moreover, as the number of network nodes increases, such as the forwarding from the node PE3 to the node P, the subsequent forwarding from the node P to the node PE2 and the forwarding from the node PE2 to nodes CE3 and CE4, the jitter is further superimposed, resulting in that the requirement of bounded jitter in the deterministic network cannot be met.

For ease of description, a packet of a deterministic flow is referred to as a deterministic packet in the following.

One solution to the above problem is to set CE1 and CE2 to send deterministic packets to PE1 at staggered times, thus eliminating the conflict. In the deterministic network architecture shown in Fig. 3, each rectangular box represents one packet of the deterministic flow, and the number in the rectangular box represents the packet number. In Fig. 3, CE1 can be set to always send deterministic packets to PE1 before CE2, thus ensuring that deterministic packets sent by CE1 and CE2 to PE1 will not arrive at the same moment and thus no conflicts occur. As shown in Fig. 3, deterministic packet 1 to deterministic packet 4 are always forwarded in an order of 1234 until deterministic packet 1 to deterministic packet 4 are forwarded to CE3 and CE4.

This solution can meet the requirement of bounded jitter in the deterministic network. However, in this solution, terminals under CE are required to cooperate with each other in the time of forwarding packets to ensure that the deterministic packets do not conflict when they arrive at PE1, which is not possible in practice because there is no relationship between the terminals. Furthermore, under large-scale networking, it is not possible to require the terminals to forward deterministic packets in a certain order, which makes it difficult to implement this solution.

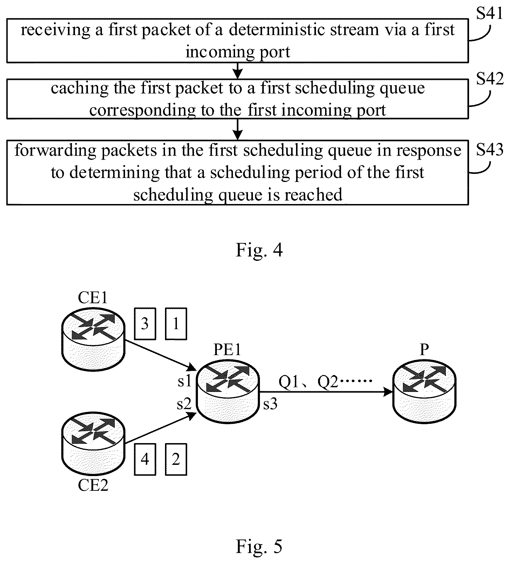

In order to achieve a bounded jitter in the deterministic network, as shown in Fig. 4, an example of the present disclosure provides a method for packet forwarding, which is applied to a network device, wherein the method includes the following operations.

Block S41, receiving a first packet of a deterministic flow via a first incoming port.

Block S42, caching the first packet to a first scheduling queue corresponding to the first incoming port.

Block S43, forwarding packets in the first scheduling queue in response to determining that a scheduling period of the first scheduling queue is reached.

In the technical solution provided by the example of the present disclosure, the network device can cache packets received via the same incoming port to the same scheduling queue and cache packets received via different incoming ports to different scheduling queues, avoiding the conflict caused by caching the packets received via different incoming ports to the same scheduling queue, i.e. avoiding an unpredictable end-to-end jitter due to random queuing of packets in the scheduling queue caused by the conflict between deterministic flows. In addition, there is only one packet of the deterministic flow passing through the same incoming port at the same time, and caching the packet received via the same incoming port to the same scheduling queue will not lead to the conflict between deterministic flows. Therefore, the bounded jitter in the deterministic network can be achieved by using the technical solution provided by the example of the present disclosure for forwarding the packets of the deterministic flows.

In the above Block S41, one or more incoming ports are included on the network device, the first incoming port may be any of the incoming ports of the network device, the first packet may be any of packets of the deterministic flow, and there may be one or more deterministic flows. In the example of the present disclosure, the network device receives the first packet of the deterministic flow via the first incoming port. Here, the network device receives packets in different deterministic flows via multiple incoming ports at the same time. For example, as in the deterministic network architecture shown in Fig. 5, each rectangular box indicates one packet of the deterministic flow and the number in the rectangular box indicates the packet number. PE1 receives the packet 1 and the packet 3 of the deterministic flow 1 via the port s1 and receives the packet 2 and the packet 4 of the deterministic flow 2 via the port s2. The packet 1 and the packet 2 are received simultaneously, the packet 3 and the packet 4 are received simultaneously.

In the above block S42, there are one or more scheduling queues on one outgoing port, and the first scheduling queue is any of the scheduling queues on the outgoing port. Upon receiving the first packet, the network device determines the outgoing port (e.g. a target outgoing port) corresponding to the deterministic flow to which the first packet belongs, and then determines the first scheduling queue corresponding to the first incoming port on the target outgoing port, and caches the first packet to the first scheduling queue.

As shown in Fig. 5, outgoing ports on PE1 corresponding to the deterministic flow 1 and the deterministic flow 2 are both the port s3, and a scheduling queue Q1 and a scheduling queue Q2 are included on the port s3, where the port s1 corresponds to the scheduling queue Q1 and the port s2 corresponds to the scheduling queue Q2. After receiving the packet 1 and the packet 3 of the deterministic flow 1 via the port s1, PE1 caches the packet 1 and the packet 3 to the scheduling queue Q1 on the port s3, and after receiving the packet 2 and the packet 4 of the deterministic flow 2 via the port s2, PE1 caches the packet 2 and the packet 4 to scheduling queue Q2 on the port s3.

In the above blocks S43, one or more packets can be stored in each scheduling queue, and each scheduling queue corresponds to a scheduling period respectively. Taking the first scheduling queue as an example, in response to determining that the scheduling period of the first scheduling queue is reached, the network device forwards the packets in the first scheduling queue.

As shown in Fig.5, the scheduling queue Q1 has a scheduling period of T1 and the scheduling queue Q2 has a scheduling period of T2. In response to determining that the scheduling period T1 is reached, the packet 1 and packet 3 stored in the scheduling queue Q1 are forwarded, and in response to determining that the scheduling period T2 is reached, the packet 2 and packet 4 stored in the scheduling queue Q2 are forwarded.

With the above example, even if the network device receives packets of different deterministic flows via different incoming ports at the same time, the packets of different deterministic flows are mapped to different scheduling queues on the outgoing port, such that an effect of "orderly queuing and shaping" is achieved based on dimension of incoming ports, and an incast mode (many-to-one communication mode) can be directly eliminated, and instead it is the 1-to-1 relationship at the same time, thus meeting the delay jitter requirements in the case of the conflict between deterministic flows. In addition, in the example of the present disclosure, the network device does not need to care about information of a specific flow, simplifying the difficulty and system complexity of implementing deterministic forwarding.

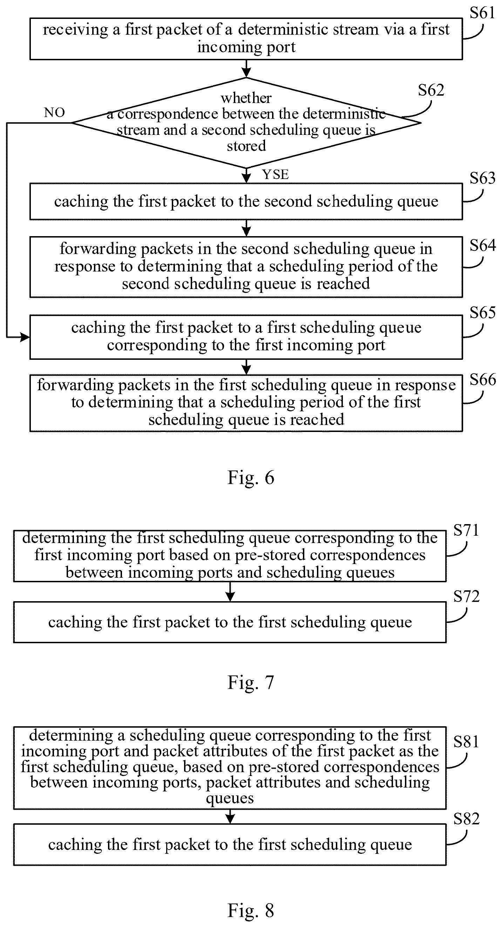

In some examples, as shown in Fig. 6, an example of the present disclosure also provide a method for packet forwarding, which is applied to a network device, the method may include the following operations.

Block S61, receiving a first packet of a deterministic flow via a first incoming port, which is the same as block S41 above.

Block S62, determining whether a correspondence between the deterministic flow and a second scheduling queue is stored, and in response to determining that the correspondence is stored, executing block S63; in response to determining that the correspondence is not stored, executing block S65.

Block S63, caching the first packet to the second scheduling queue.

Block S64, forwarding packets in the second scheduling queue in response to determining that a scheduling period of the second scheduling queue is reached.

Block S65, caching the first packet to a first scheduling queue corresponding to the first incoming port, which is the same as block S42 above.

Block S66, forwarding packets in the first scheduling queue in response to determining that a scheduling period of the first scheduling queue is reached, which is the same as in block S43 above.

In the technical solution provided by the example of the present disclosure, the correspondence between the deterministic flow and the scheduling queue can be stored in the network device. In response to determining that a scheduling queue (e.g. the second scheduling queue) corresponding to the deterministic flow is stored, the packets are forwarded preferentially according to the correspondence between the deterministic flow and the scheduling queue. The resource planning granularity in the solution of packet mapping and forwarding according to flows is smaller than that in the solution of packet mapping and forwarding according to incoming ports. Therefore, by using the technical solution provided by the example of the present disclosure, the bounded jitter in the deterministic network can be achieved while ensuring the stable forwarding of some important service flows and improving the flexibility and efficiency of planning forwarding resource.

In the above block S62, the correspondence between the deterministic flow and the second scheduling queue can be stored in the network device, that is, for some special deterministic flows, scheduling queues corresponding to these deterministic flows can be pre-configured. For example, for sending of instant packets, scheduling queues corresponding to the instant packets can be configured so as to forward them as soon as possible; for important service flows, fixed scheduling queues, i.e., fixed scheduling periods, corresponding to the service flows can be configured, so as to forward them stably and periodically. For non-special deterministic flows, scheduling queues corresponding to these deterministic flows may not be configured, that is, packets of these deterministic flows are mapped to corresponding scheduling queues according to the incoming ports. Since that the number of the incoming ports is much less than the number of the deterministic flows, the complexity of resource planning according to the incoming ports is much smaller than that of resource planning according to the deterministic flows. Therefore, the example of the present disclosure simplifies the complexity of resource planning and reduces labor costs of configuring and adjusting correspondences of scheduling queues.

Based on pre-stored correspondences between flows and scheduling queues, the network device determines whether a correspondence between the deterministic flow and the second scheduling queue is stored. In response to determining that the correspondence between the deterministic flow and the second scheduling queue is stored, block S63 is executed to cache packets in the deterministic flow to the second scheduling queue, and the packets in the second scheduling queue are forwarded in response to determining that the scheduling period of the second scheduling queue is reached; in response to determining that the correspondence between the deterministic flow and the second scheduling queue is not stored, block S65 is executed to cache the first packet to the first scheduling queue, and packets in the first scheduling queue are forwarded in response to determining that the scheduling period of the first scheduling queue is reached. The first scheduling queue and the second scheduling queue may be the same or different.

In some examples, correspondences between incoming ports and scheduling queues may be pre-stored in the network device, and the above block S42 may include the following operations, as shown in Fig.7.

Block S71, determining the first scheduling queue corresponding to the first incoming port based on pre-stored correspondences between incoming ports and scheduling queues.

In the example of the present disclosure, the network device may include a plurality of incoming ports, and one incoming port corresponds to one scheduling queue. For example, as shown in Fig. 4, the network device PE1 includes ports s1 and s2, with the port s1 corresponding to a scheduling queue Q1 and the port s2 corresponding to a scheduling queue Q2.

In the example of the present disclosure, as the number of incoming ports changes, scheduling queues on the outgoing port can be increased or reduced to achieve the technical solution provided in the example of the present disclosure.

Block S72, caching the first packet to the first scheduling queue.

In the technical solution provided in the example of the present disclosure, the correspondences between incoming ports and scheduling queues are pre-stored in the network device. After receiving the first packet of the deterministic flow via the first incoming port, the network device searches for a correspondence including the first incoming port from the pre-stored correspondences between incoming ports and scheduling queues, and in response to determining that the correspondence is searched, the scheduling queue included in the searched correspondence is used as the first scheduling queue corresponding to the first incoming port, and the first packet is cached into the first scheduling queue, which improves the efficiency of packet forwarding while avoiding the conflict between deterministic flows.

In some examples, correspondences between incoming ports, packet attributes and scheduling queues may be pre-stored in the network device, then the above block S42 may include the following operations, as shown in Fig.8.

Block S81, determining a scheduling queue corresponding to the first incoming port and packet attributes of the first packet as the first scheduling queue, based on pre-stored correspondences between incoming ports, packet attributes and scheduling queues.

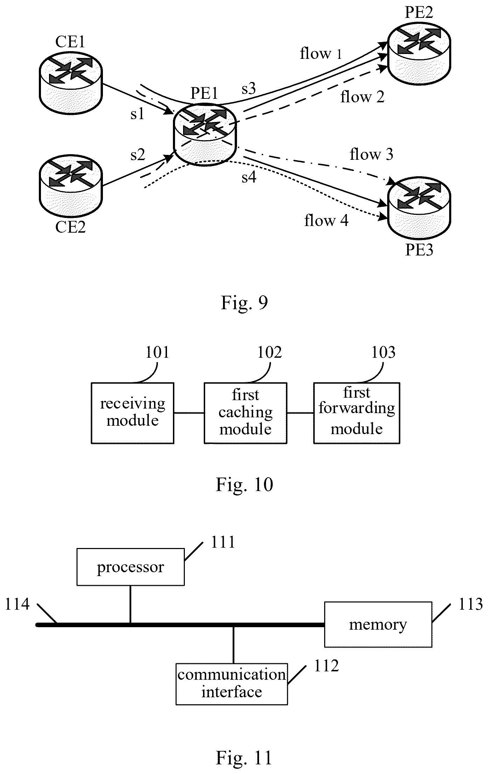

In an example of the present disclosure, the packet attributes may include at least one of the following information: a destination edge device, a destination terminal, and a next hop node. For example, taking the packet attributes including the destination edge device as an example, in the deterministic network architecture shown in Fig. 9, the destination edge device for a deterministic flow 1 (flow1) and a deterministic flow 2 (flow2) is PE2, that is, the destination edge device for packets in flow1 and flow2 is PE2; the destination edge device for a deterministic flow 3 (flow3) and a deterministic flow 4 (flow4) is PE3, that is, the destination edge device for packets in the flow3 and the flow4 is PE3. PE1 receives packets of the deterministic flow 1 and the deterministic flow 3 via a port s1 and receives packets of the deterministic flow 2 and the deterministic flow 4 via a port s2. On PE1, the deterministic flow 1 and the deterministic flow 2 correspond to the same outgoing port s3, and the deterministic flow 3 and the deterministic flow 4 correspond to the same outgoing port s4. At this time, a correspondence between s1, PE2 and Q1 and a correspondence between s2, PE2 and Q2 on the port s3 and a correspondence between s1, PE3 and Q3 and a correspondence between s2, PE3 and Q4 on the port s4 can be pre-stored in PE1, where Q1 and Q2 are scheduling queues included on the port s3 and Q3 and Q4 are scheduling queues included on the port s4.

Block S82, caching the first packet to the first scheduling queue.

In the example of the present disclosure, the network device, after determining the first scheduling queue in block S81, caches the first packet to the first scheduling queue for subsequent forwarding.

In the example of the present disclosure, in the deterministic network architecture as shown in Fig. 9, a congestion and queuing is bound to occur in the incast mode. In response to determining that the deterministic flow 1 and the deterministic flow 2 go to PE2 at the same time, there is a 2-to-1 situation at the outgoing port s3 of PE1, resulting in uncertainty in the delay jitter of the deterministic flow 1 and the deterministic flow 2 due to randomness of queuing. By applying the solution provided by the example of the present disclosure, multiple scheduling sequences, including Q1 and Q2, are set at the outgoing port s3, and the deterministic flow 1 and the deterministic flow 2 are cached to the scheduling sequences Q1 and Q2 respectively according to the incoming ports and the packet attributes, thereby eliminating the jitter. Similarly for the outgoing port s4, multiple scheduling sequences are set at the outgoing port s4, including Q3 and Q4, and the deterministic flow 3 and the deterministic flow 4 are cached to the scheduling sequences Q3 and Q4, respectively, based on the incoming ports and the packet properties, thereby eliminating the jitter.

In the example of the present disclosure, deterministic flows coming from the same incoming port may go anywhere. The incoming ports and the packet attributes are used as the basis for resource planning, and the correspondences between the incoming ports, the packet attributes and the scheduling queues is used to achieve the queuing and forwarding of the deterministic flows, which facilitates the subsequent resource planning for the deterministic flow forwarding. Here, deterministic flows cached to the same scheduling queue can be regarded as an aggregated flow, that is, deterministic flows with the same incoming port and packet attributes can be regarded as the aggregated flow. For example, a deterministic flow 5 (not shown in the figure) and the deterministic flow 1 are both received from the port s1 in Fig. 9, and the destination edge device of the deterministic flow 5 is also PE2, then the deterministic flow 1 and the deterministic flow 5 can be regarded as an aggregated flow and cached to the same scheduling queue.

In the technical solution provided in the example of the present disclosure, the correspondences between the incoming ports, the packet attributes and the scheduling queues are pre-stored in the network device. After receiving the first packet of the deterministic flow via the first incoming port, the network device searches for a correspondence including the first incoming port and the packet attributes from the pre-stored correspondences between the incoming ports, the packet attributes and the scheduling queues, and in response to determining that the correspondence is searched, the scheduling queue included in the searched correspondence is used as the first scheduling queue corresponding to the first incoming port and the packet attributes, and the first packet is cached into the first scheduling queue. By increasing correspondences between the packet attributes and the scheduling queues, the flexibility and the efficiency of resource planning are improved while the conflict between deterministic flows are avoided.

Corresponding to the above method for packet forwarding, an example of the present disclosure also provide apparatus for packet forwarding, as shown in Fig. 10, which is applied to a network device, wherein the apparatus includes:
receiving module 101, to receive a first packet of a deterministic flow via a first incoming port;
a first caching module 102, to cache the first packet to a first scheduling queue corresponding to the first incoming port;
a first forwarding module 103, to forward packets in the first scheduling queue in response to determining that a scheduling period of the first scheduling queue is reached.

In the technical solution provided in the example of the present disclosure, the network device can cache packets received via the same incoming port to the same scheduling queue and cache packets received via different incoming ports to different scheduling queues, avoiding the conflict caused by caching the packets received via different incoming ports to the same scheduling queue, i.e. avoiding an unpredictable end-to-end jitter due to random queuing of packets in the scheduling queue caused by conflict between deterministic flows. In addition, there is only one packet of the deterministic flow passing through the same incoming port at the same time, and caching the packets received via the same incoming port to the same scheduling queue will not lead to the conflict between deterministic flows. Therefore, the bounded jitter in the deterministic network can be achieved by using the technical solution provided by the example of the present disclosure for forwarding the packets of the deterministic flows.

In some examples, the above packet forwarding apparatus may further include:
a second caching module and a second forwarding module;
the second caching module is to, after receiving the first packet of the deterministic flow via the first incoming port, cache the first packet to a second scheduling queue in response to determining that a correspondence between the deterministic flow and the second scheduling queue is stored;
the second forwarding module is to forward packets in the second scheduling queue in response to determining that a scheduling period of the second scheduling queue is reached;
the first caching module 102 is specifically to cache the first packet to the first scheduling queue corresponding to the first incoming port in response to determining that the correspondence between the deterministic flow and the second scheduling queue is not stored.

In some examples, the first caching module 102 may include:
a first determining sub-module, to determine the first scheduling queue corresponding to the first incoming port based on pre-stored correspondences between incoming ports and scheduling queues;
a first caching sub-module, to cache the first packet to the first scheduling queue.

In some examples, the network device can include a plurality of incoming ports, wherein one incoming port corresponds to one scheduling queue.

In some examples, the first caching module 102 can include:
a second determining sub-module, to determine a scheduling queue corresponding to the first incoming port and packet attributes of the first packet as the first scheduling queue, based on pre-stored correspondences between incoming ports, packet attributes and scheduling queues;
a second caching sub-module, to cache the first packet to the first scheduling queue.

In some examples, the packet attributes can include at least one of following information: a destination edge device, a destination terminal, a next-hop node.

An example of the present disclosure also provide an electronic device including a processor 111, a communication interface 112, a memory 113 and a communication bus 114, as shown in Fig. 11, wherein the processor 111, the communication interface 112, and the memory 113 communicate with each other via the communication bus 114;
the memory 113 is to store computer programs;
the processor 111 is to carry out any method for packet forwarding mentioned above when executing the programs stored on the memory 113.

The communication bus mentioned above for the electronic device can be, for example, a Peripheral Component Interconnect (PCI) bus or an Extended Industry Standard Architecture (EISA) bus. The communication bus can be divided into an address bus, a data bus, a control bus and so on. For ease of presentation, only a thick line is used in the diagram, but it does not mean that there is only one bus or one type of bus.

The communication interface is used for communication between the above-mentioned electronic device and other devices.

The memory may include a Random Access Memory (RAM), or a Non-Volatile Memory (NVM), such as at least one disk memory. Optionally, the memory may also be at least one storage located away from the aforementioned processor.

The above processor may be a general purpose processor, including a Central Processing Unit (CPU), a Network Processor (NP), etc., or a Digital Signal Processor (DSP), an Application Specific Integrated Circuits (ASIC), a Field-Programmable Gate Array (FPGA) or other programmable logic devices, discrete gates or transistor logic devices, discrete hardware components.

In a further example provided by the present disclosure, there is also provided a computer readable storage medium having computer programs stored therein, the computer programs, when executed by a processor, carry out the operations of any of the methods for packet forwarding mentioned above.

In a further example provided by the present disclosure, there is also provided a computer program product comprising instructions which, when run on a computer, cause the computer to perform any of the methods for packet forwarding in the above examples.

In the above examples, it may be implemented in whole or in part by software, hardware, firmware or any combination thereof. When implemented in software, it can be implemented in whole or in part in the form of a computer procedure product. The computer procedure product includes one or more computer instructions. When the computer procedure instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be magnetic media (such as a floppy disk, a hard disk, a magnetic tape), optical media (such as DVD), or semiconductor media (such as Solid State Disk (SSD)) and the like.

It should be noted that, relational terms such as first and second and the like herein are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising one..." do not preclude the presence of additional identical elements in a process, method, article or device that includes the mentioned elements.

The various examples in this specification are described in a related manner. Each example focuses on the differences from other examples, and the same and similar parts between the various examples can be referred to each other. Especially, for the example of the apparatus, device and storage medium, the description is relatively simple because it is basically similar to the example of the method, and the relevant points can be referred to the partial description of the example of the method.

The above descriptions are only preferred examples of the disclosure, and are not intended to limit the disclosure. Any modifications, equivalent replacements, improvements and the like made within the spirit and principles of the disclosure shall be included within the scope of protection of the disclosure.

## Claims

1. A method for packet forwarding, which is applied to a network device, wherein the method comprises:
receiving a first packet of a deterministic flow via a first incoming port;
caching the first packet to a first scheduling queue corresponding to the first incoming port; and
forwarding packets in the first scheduling queue in response to determining that a scheduling period of the first scheduling queue is reached.

2. The method according to claim 1, wherein, after receiving a first packet of a deterministic flow via a first incoming port, the method further comprises:
in response to determining that a correspondence between the deterministic flow and a second scheduling queue is stored, caching the first packet to the second scheduling queue; forwarding packets in the second scheduling queue in response to determining that a scheduling period of the second scheduling queue is reached; and
in response to determining that the correspondence between the deterministic flow and the second scheduling queue is not stored, performing an operation of caching the first packet to a first scheduling queue corresponding to the first incoming port.

3. The method according to claim 1 or 2, wherein the caching the first packet to a first scheduling queue corresponding to the first incoming port comprises:
determining the first scheduling queue corresponding to the first incoming port based on pre-stored correspondences between incoming ports and scheduling queues;
caching the first packet to the first scheduling queue.

4. The method according to claim 3, wherein the network device comprises a plurality of incoming ports, wherein one incoming port corresponds to one scheduling queue.

5. The method according to claim 1 or 2, wherein the caching the first packet to a first scheduling queue corresponding to the first incoming port comprises:
determining a scheduling queue corresponding to the first incoming port and packet attributes of the first packet as the first scheduling queue, based on pre-stored correspondences between incoming ports, packet attributes and scheduling queues; and
caching the first packet to the first scheduling queue.

6. The method according to claim 5, wherein the packet attributes comprise at least one of following information: a destination edge device, a destination terminal, a next hop node.

7. Apparatus for packet forwarding, which is applied to a network device, wherein the apparatus comprises:
a receiving module, to receive a first packet of a deterministic flow via a first incoming port;
a first caching module, to cache the first packet to a first scheduling queue corresponding to the first incoming port; and
a first forwarding module, to forward packets in the first scheduling queue in response to determining that a scheduling period of the first scheduling queue is reached.

8. The apparatus according to claim 7, wherein the apparatus further comprises a second caching module and a second forwarding module;
the second caching module is to, after receiving a first packet of a deterministic flow via a first incoming port, cache the first packet to a second scheduling queue in response to determining that a correspondence between the deterministic flow and the second scheduling queue is stored;
the second forwarding module is to forward packets in the second scheduling queue in response to determining that a scheduling period of the second scheduling queue is reached; and
the first caching module is specifically to cache the first packet to the first scheduling queue corresponding to the first incoming port in response to determining that the correspondence between the deterministic flow and the second scheduling queue is not stored.

9. The apparatus according to claim 7 or 8, wherein the first caching module comprises:
a first determining sub-module, to determine the first scheduling queue corresponding to the first incoming port based on pre-stored correspondences between incoming ports and scheduling queues;
a first caching sub-module, to cache the first packet to the first scheduling queue.

10. The apparatus according to claim 9, wherein the network device comprises a plurality of incoming ports, wherein one incoming port corresponds to one scheduling queue.

11. The apparatus according to claim 7 or 8, wherein the first caching module comprises:
a second determining sub-module, to determine a scheduling queue corresponding to the first incoming port and packet attributes of the first packet as the first scheduling queue, based on pre-stored correspondences between incoming ports, packet attributes and scheduling queues;
a second caching sub-module, to cache the first packet to the first scheduling queue.

12. The apparatus according to claim 11, wherein the packet attributes comprise at least one of following information: a destination edge device, a destination terminal, a next hop node.

13. An electronic device, comprising a processor, a communication interface, a memory and a communication bus, wherein the processor, the communication interface and the memory communicate with each other via the communication bus;
the memory is to store computer programs;
the processor is to carry out the method according to any one of claims 1-6 when executing the programs stored on the memory.

14. A computer readable storage medium having computer programs stored therein, the computer programs, when executed by a processor, carry out the method according to any one of claims 1-6.
